# EUROPÄISCHE PATENTSCHRIFT

(11) **EP 3 344 871 B1**
(45) Veröffentlichungstag und Bekanntmachung des Hinweises auf die Patenterteilung: **21.10.2020**
(21) Anmeldenummer: 16760699.5
(22) Anmeldetag: 31.08.2016
(51) Int. Cl.: F03D 80/60, F03D 13/20

(54) **WINDENERGIEANLAGE UND VERFAHREN ZUM STEUERN EINER KÜHLUNG EINER WINDENERGIEANLAGE**
WIND ENERGY INSTALLATION AND METHOD FOR CONTROLLING A COOLING OF A WIND ENERGY INSTALLATION
ÉOLIENNE ET PROCÉDÉ DE COMMANDE DU REFROIDISSEMENT D'UNE ÉOLIENNE

(30) Priorität: 04.09.2015 DE 102015217035
(43) Veröffentlichungstag der Anmeldung: 11.07.2018
(73) Patentinhaber: Wobben Properties GmbH, 26607 Aurich (DE)
(72) Erfinder: DE VRIES, Jan, 26605 Aurich (DE); ENSKONATUS, Kai, 26759 Hinte (DE); KÖNITZ, Malte, 26135 Oldenburg (DE)
(74) Vertreter: Eisenführ Speiser
(86) Internationale Anmeldenummer: PCT/EP2016/070502
(87) Internationale Veröffentlichungsnummer: WO 2017/037109

(56) Entgegenhaltungen:
- WO-A1-2013/185767
- DE-U1- 9 417 738
- DE-U1- 9 417 738
- US-A1- 2008 290 662
- US-A1- 2014 361 544

## Beschreibung

Die vorliegende Erfindung betrifft eine Windenergieanlage und ein Verfahren zum Steuern einer Kühlung einer Windenergieanlage.

Bei der Umformung von Energie in einer Windenergieanlage entstehen regelmäßig Verluste in Form von Wärme. Dies gilt sowohl bei Umformung der kinetischen Energie des Windes in elektrische Energie im Generator einer Windenergieanlage, wobei sich diese Verluste regelmäßig im Hauptantriebsstrang der Windenergieanlage einstellen, als auch bei der elektrischen Einspeisung der von der Windenergieanlage erzeugten Energie in ein Netz, zum Beispiel Mittelspannungsnetz. Hierzu sind regelmäßig Leistungselektronikvorrichtungen, beispielsweise Wechselrichter, Transformatoren und/oder Schaltanlagen oder dergleichen notwendig.

Im Hauptantriebsstrang, welcher bei einer Windenergieanlage in der Gondel der Windenergieanlage untergebracht ist, entstehen die Verluste maßgeblich im Getriebe (wenn ein solches vorhanden ist), an den Lagern, im Generator (zum Beispiel die Ummagnetisierungsverluste) oder an anderen Steuereinheiten, wie zum Beispiel an den Hydraulikanlagen oder Steuer- und Regelungseinheiten, zum Beispiel Pitch-Antriebe, mittels denen die Rotorblätter angestellt oder Azimut-Antriebe, mittels denen die Windenergieanlage zum Wind angestellt wird. Befinden sich in der Gondel der Windenergieanlage darüber hinaus noch Leistungselektronikvorrichtungen wie z. B. Transformatoren, Gleichrichter und/oder dergleichen, wird auch in solchen Einheiten im Betrieb der Windenergieanlage Wärme erzeugt, die abgeführt werden muss.

Bei getriebelosen Windenergieanlagen entstehen die Hauptverluste im Hauptantriebsstrang im Generator, d. h. in der Gondel der Windenergieanlage einerseits und im Netztransformator und ggf. in der Leistungselektronik, zum Beispiel Wechselrichter, wobei Letztere regelmäßig im Turmfußbereich der Windenergieanlage untergebracht sind. Bei einer 1,5 MW Windenergieanlage können die Verluste in dem Bereich von 50 kW bis 100 kW liegen.

Die US 2014/361544 A1 zeigt eine Windkraftanlage mit einem ringförmigen Gehäuse, das um einen Teil des Bodenabschnitts des Turms angeordnet ist, wobei elektrische Komponenten und ein Kühlsystem untergebracht sind. Das Gehäuse umfasst auch eine Vielzahl von Lüftungsöffnungen und eine Vielzahl von Abgasöffnungen.

US 2008/290662 A1 bezieht sich auf ein Kühlsystem für die Gondel einer Windkraftanlage, das einen ersten Wärmetauscher in der Gondel, einen zweiten Wärmetauscher im Fundament des Turms und einen dritten Wärmetauscher außerhalb des Turms umfasst.

EP 1 200 733 zeigt eine mit einem geschlossenen Kühlkreislauf, wobei der Turm der Windenergieanlage als Kühlelement oder als Wärmetausch in den Kühlkreislauf eingebunden ist und Wärme, die im Inneren der Windenergieanlage entsteht, über den Turm der Windenergieanlage abgegeben wird. Der Vorteil dieser Lösung besteht darin, dass mit möglichst wenig Fremdluft der gewünschte Kühleffekt erzielt werden kann, sodass der Eintrag von Feuchtigkeit, Staub oder anderer Bestandteile aus der Luft (zum Beispiel auch Salz) möglichst verhindert, jedenfalls deutlich gegenüber anderen Lösungen verringert wird. Wenn jedoch nicht für eine hinreichende Kühlung der Komponenten innerhalb der Windenergieanlage gesorgt werden kann, muss unter Umständen auf eine Zufuhr von Fremdluft von außen zugegriffen werden, um die Kühlleistung zu verbessern. Das kann Probleme mit Staub oder Salz oder dergleichen nach sich ziehen.

DE 10 2004 061 391 zeigt eine Windenergieanlage, bei welcher eine Leitung für ein Wärmemedium wenigstens abschnittsweise durch das Fundament der Windenergieanlage verläuft und geeignet ist, mit dem Boden Wärme auszutauschen, dabei soll die Leitung auch wenigstens abschnittsweise durch das Erdreich selbst verlaufen.

Aus EP 2 002 120 ist ein Wärmeverwaltungssystem für eine Windenergieanlage bekannt, wobei die wärmeerzeugenden Komponenten (Transformator, Umrichter, etc.) direkt auf der Innenfläche des Turms der Windenergieanlagen angeordnet sind und die von den wärmeerzeugenden Komponenten erzeugte Wärme direkt auf die Innenfläche des Turms der Windenergieanlagen abgeführt wird, wodurch ein guter Wärmeleitweg zu dem gesamten Windenergieanlagenturm bereitgestellt ist.

Aus DE 10 2009 055 784 ist eine Windenergieanlage und ein Verfahren zur Temperaturregelung mittels einer Komponente einer Windenergieanlage bekannt, wobei die Temperaturregelung mindestens einen thermisch isolierten Fluidspeicher und ein Leitungssystem, welches den Fluidspeicher mit mindestens einer Komponente mit der Windenergieanlage verbindet, und einer Vorrichtung zum Transport eines Fluids durch das Leitungssystem umfasst, wobei die mindestens eine Komponente und das Leitungssystem miteinander in thermischer Verbindung stehen. Der Fluidspeicher ist außerhalb des Turms der Windenergieanlage angeordnet.

Aus EP 1 798 414 ist eine Windenergieanlage bekannt, bei welcher außenseitig am Turm Wärmetauscher in Form von Kühlrippen angeordnet sind, welche von einem wärmetragenden Medium (zum Beispiel Luft oder Wasser) durch die Turmwandung geführt werden, und dieses Medium wird von den Komponenten der Windenergieanlage innerhalb der Windenergieanlage erwärmt, sodass das erwärmte Medium zur Außenseite des Turms geführt wird, um dort mittels der Wärmetauscher abgekühlt zu werden. Die Wärmetauscher sind an wenigstens vier Seiten des Turms der Windenergieanlage angeordnet, um somit unabhängig von der Windrichtung stets für eine optimale Kühlung zu sorgen.

EP 2 203 642 offenbart eine Windenergieanlage, bei welcher die Wärme, die innerhalb des Turmes der Windenergieanlage entsteht, durch einen Wärmetauscher und ein daran angeschlossenes Leitungssystem über ein Wärmeträgermedium abgeführt wird, und zwar durch das Fundament der Windenergieanlage in einen weiteren Wärmetauscher, welcher sich außerhalb und neben dem Turm befindet.

Darüber hinaus sind weitere Kühlkonzepte für Windenergieanlagen bekannt, z. B. WO-A-99/30031, DE-A-19528862, DE 2707343, DE 69217654, JP 60-245955, JP 60-093261, DE-A1-10 352023, WO-A-01/77526, US-B1-7168251, DE-A1-10 204061391.

Auch sind einige der bereits vorbekannten Lösungen zum Teil sehr kostenintensiv (zum Beispiel die aus DE 10 2004 061 391 oder EP 2 203 642 bekannte Lösung) und die aus DE 10 2009 055784 bekannten Lösungen sind auch für den Offshore-Einsatz nicht geeignet.

Schließlich sind viele der vorbekannten Lösungen außerordentlich wartungsintensiv, was wiederum die Kosten für das System erhöht. Die meisten der vorbekannten Lösungen sind darüber hinaus nicht bei einer bestehenden Anlage nachrüstbar und einige Lösungen, zum Beispiel die aus EP 1 798 414 bekannte Lösung, sind nicht sicher gegen Vandalismus, also das vorsätzliche Zerstören der an der Turmaußenwand angebrachten Kühlrippen.

Vor allem erfüllen die aus EP 1 798 414, DE 10 2009 055784, EP 2 002 120 oder DE 10 2004 061 391 bekannten Lösungen nicht die Anforderung an eine attraktive Ästhetik der gesamten Windenergieanlage.

In der prioritätsbegründenden deutschen Patentanmeldung hat das Deutsche Patent- und Markenamt die folgenden Dokumente recherchiert: DE 199 32 394 A1, US 2012/0 119 505 A1 und EP 2 000 668 A1.

Aufgabe der Erfindung ist es daher, eine Kühlung für eine Windenergieanlage vorzusehen, die die vorgenannten Nachteile vermeidet, insbesondere eine Kühlung für eine Windenergieanlage vorzusehen, die weiterhin ein ästhetisch ansprechendes Aussehen aufweist, die wartungsarm ist, die weitestgehend sicher gegen Vandalismusschäden ist, die auch nachrüstbar ist, die darüber hinaus kostengünstig ist und die auch eine verbesserte Kühlleistung bereitstellt.

Die Aufgabe wird gelöst mittels einer Windenergieanlage nach Anspruch 1 und eins Verfahrens nach Anspruch 6.

Vorteilhafte Weiterbildungen werden in den Unteransprüchen beschrieben.

Somit wird eine Windenergieanlage mit einer ersten Kühleinheit vorgeschlagen, bei welcher Leitungen, die von einem Kühlmedium durchflossen werden, aus dem Inneren der Windenergieanlage durch die Turmwandung oder durch das Fundament nach außen herausgeführt werden und die Kühlleitungen in Wärmetauscher außen am Turm anliegen bzw. dort angeordnet sind und zwischen der Turmwandung und einer Abdeckung der Wandung des Kühlsystems angeordnet sind.

Der Vorteil dieser Lösung besteht darin, dass die erste Kühleinheit im Bereich des Fundaments, also im bodennahen Bereich des Turms, zum Beispiel an einem fundamentnahen Turmsegment der Windenergieanlage ausgebildet werden kann und durch die Abdeckung die Gesamtästhetik der Windenergieanlage nicht wesentlich beeinträchtigt wird, die Lösung vor allem bei einer bestehenden (also bereits in Betrieb befindlichen) Windenergieanlage nachrüstbar ist, die Lösung ferner weitestgehend vandalismussicher und auch leicht zu warten ist.

Vorzugsweise ist in dem Bereich zwischen der Turmwandung (Außenseite) und der Abdeckung (Innenseite) des Kühlsystems ein Lüftungssystem, zum Beispiel bestehend aus mehreren Lüftern, vorgesehen, um somit Kühlluft von außen durch eine Öffnung z. B. im unteren Bereich anzusaugen, in den Raum zwischen der Turmwandung und der Abdeckung zu drücken, um somit die dort befindlichen Kühlleitungen in den Wärmetauschern zu umströmen und das in den Kühlleitungen befindliche Kühlmedium abzukühlen.

Wenn die Abdeckung oder Wandung des Kühlsystems im Bereich des Turmfußes an das Äußere des gesamten Turmes optisch angepasst ist, zum Beispiel durch eine Farbgebung, wird die gesamte Abdeckung oder Wandung auch kaum wahrgenommen und beeinträchtigt somit gar nicht oder kaum die Ästhetik der gesamten Windenergieanlage. Durch die Abdeckung oder Wandung ist das Kühlsystem darüber hinaus weitestgehend sicher gegen Vandalismus, dies gilt insbesondere dann, wenn die Abdeckung oder Wandung aus einer Metallplatte oder dergleichen besteht, und vor allem kann das erfindungsgemäße Kühlsystem jederzeit nachgerüstet werden. Ferner ist das erfindungsgemäße Kühlsystem auch außerordentlich wartungsarm und die erfindungsgemäße Lösung somit sehr kostengünstig.

Die Türme von Windenergieanlagen weisen im turmnahen Bereich regelmäßig eine, zwei oder mehrere Türen auf. Wenn nunmehr eine solche Windenergieanlage mit einem Kühlsystem und deren Abdeckung oder Wandung am turmfußnahen Bereich ausgestattet ist, muss selbstverständlich der Zugang zu den Türen jederzeit möglich sein, die Kühlleitung oder dergleichen sollten also nicht die Türfläche überstreichen. Anderseits kann vor der eigentlichen Tür, die im Turm selbst ist, noch eine zweite Tür angeordnet werden, die dann in der Abdeckung ausgebildet ist, sodass für Zugang zur Windenergieanlage das Öffnen von zwei Türen notwendig ist. Dies erhöht nochmals strukturell die Sicherheit der Windenergieanlage gegenüber einem kriminellen Zugang und dem unbefugten Betreten der Windenergieanlage.

Dabei kann die Tür, die in der Abdeckung oder Wandung ausgebildet ist und die der Tür in der Turmwandung gegenüber liegt, auch so ausgerüstet sein, dass sie über ein anderes Schloss-Schlüssel-System verfügt, wie die Tür im Turm der Windenergieanlage. Ferner kann die Tür in der Abdeckung mit einem Alarmsystem versehen sein, so dass dann, wenn jemand ungebeten diese Tür aufbricht, automatisch ein Alarm ausgelöst wird und der Unbefugte dann immer noch die Tür in der Turmwandung zu öffnen hat, was eine gewisse Zeit benötigt, und somit dem Service (oder Polizei) und dergleichen ermöglicht, rechtzeitig zur Windenergieanlage zu kommen und die Sicherheit der Windenergieanlage wiederherzustellen.

Besonders bevorzugt ist dabei, dass die Tür, die in der Abdeckung oder Wandung ausgebildet ist, als Schiebetür ausgebildet ist, wobei das Türblatt an seinem vorderen Bereich bei verschlossener Tür hinter der Abdeckung liegt und somit auch mit einem Aufbruchswerkzeug nicht zur Seite geschoben werden kann.

Die Tür in der Abdeckung oder Wandung erhöht nochmals den ästhetisch einheitlichen Eindruck der gesamten Windenergieanlage.

In einer bevorzugten (auch alternativen) Ausführungsform können die Kühlleitungen selbst auch bis in das Fundament der Windenergieanlage geleitet werden, so dass Wärme, die durch das Kühlmedium abgegeben wird, in das Fundament der Anlage abgegeben wird.

Auch ist es möglich, dass an die Kühlleitung ein Rückkühler bzw. Wärmetauscher angebunden ist, welcher im Turmfundament angeordnet ist.

Die erfindungsgemäße Kühleinrichtung gemäß dieser Ausführung hat darüber hinaus auch den Vorteil, dass durch die Wärmeabgabe im Bereich des Turmfußes auch dieser Bereich des Turms dann, wenn es draußen außerordentlich kalt ist, zum Beispiel -30°C, immer noch eine - gegenüber der Außentemperatur - deutlich höhere Temperatur aufweist und somit auch etwaige Einrichtungen innerhalb des Turms besser gegen Frost- oder Rostschäden, Kälte, Luftfeuchte oder dergleichen geschützt sind.

Es ist auch schon einmal vorgekommen, dass einer kalten Wetterperiode intensiver Regenschlag vorhergeht und dass durch den am Turm herablaufenden/-tropfenden Regen Wasser auch gegen die in der Turmwandung ausgebildeten Türen geschlagen ist und dann dort gefror. In einem solchen Fall ist es für den Service überaus schwierig, wegen der Vereisung, solche Türen überhaupt zu öffnen. Mittels der Erfindung wird nunmehr auch dafür Sorge getragen, dass eine solche Vereisung an den Türen erst gar nicht auftreten kann und somit der Zugang zur Anlage stets gewährleistet ist.

In der bisher beschriebenen Variante bildet die erfindungsgemäße Kühlung die alleinige Kühleinrichtung der Windenergieanlage.
- Fig. 1: zeigt eine schematische Darstellung einer Windenergieanlage gemäß der Erfindung,
- Fig. 2: zeigt eine schematische Darstellung eines unteren Bereiches eines Turms einer Windenergieanlage gemäß einem ersten Ausführungsbeispiel,
- Fig. 3: zeigt eine schematische Teilschnittansicht eines Turms einer Windenergieanlage gemäß dem ersten Ausführungsbeispiel,
- Fig. 4: zeigt eine schematische Darstellung einer Kühleinheit einer Windenergieanlage gemäß einem zweiten Ausführungsbeispiel,
- Fig. 5: zeigt eine Schnittansicht eines unteren Bereichs eines Turms einer Windenergieanlage gemäß einem ersten oder zweiten Ausführungsbeispiel,
- Fig. 6: zeigt eine schematische Schnittansicht eines unteren Bereichs eines Turms einer Windenergieanlage gemäß dem ersten oder zweiten Ausführungsbeispiel,
- Fig. 7: zeigt eine schematische Schnittansicht einer Windenergieanlage gemäß einem dritten Ausführungsbeispiel, und
- Fig. 8: zeigt eine schematische Schnittansicht einer Windenergieanlage gemäß einem vierten Ausführungsbeispiel.

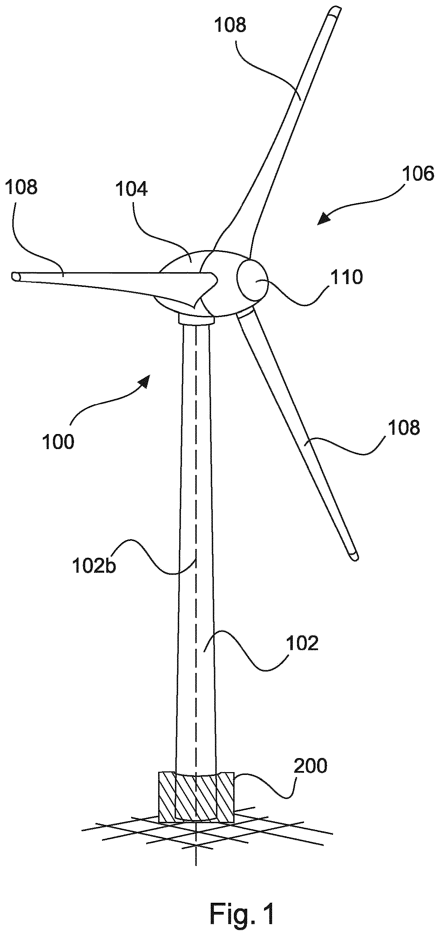

Fig. 1 zeigt eine schematische Darstellung einer Windenergieanlage gemäß der Erfindung. Die Windenergieanlage 100 weist einen Turm 102 mit einer Längsachse 102b und eine Gondel 104 auf dem Turm 102 auf. Der Turm 102 kann eine Mehrzahl von Turmsegmenten aufweisen, welche aufeinander platziert sind, um den Turm 102 auszubilden. An der Gondel 104 ist ein aerodynamischer Rotor 106 mit beispielsweise drei Rotorblättern 108 und einem Spinner 101 vorgesehen. Der aerodynamische Rotor 106 wird im Betrieb der Windenergieanlage durch den Wind in eine Drehbewegung versetzt und dreht somit auch einen Rotorläufer eines elektrischen Generators, welcher direkt oder indirekt mit dem aerodynamischen Rotor 106 gekoppelt ist. Der elektrische Generator ist in der Gondel 104 angeordnet und erzeugt elektrische Energie. Der Pitchwinkel der Rotorblätter 108 kann durch Pitchmotoren an den Rotorblattwurzeln der jeweiligen Rotorblätter 108 verändert werden.

Im Bereich eines unteren Turmsegmentes ist eine erste Kühleinheit 200 vorgesehen. Diese erste Kühleinheit 200 ist dabei außen an dem unteren oder um das untere Turmsegment bzw. dem Turmfuß vorgesehen.

Gemäß der Erfindung kann die Kühleinheit als durchgängiger Ring oder alternativ auch nicht durchgängig, sondern segmentweise z.B. als Halbsegment, Viertelsegment, Achtelsegment etc. um den Turm der Windenergieanlage angeordnet sein.

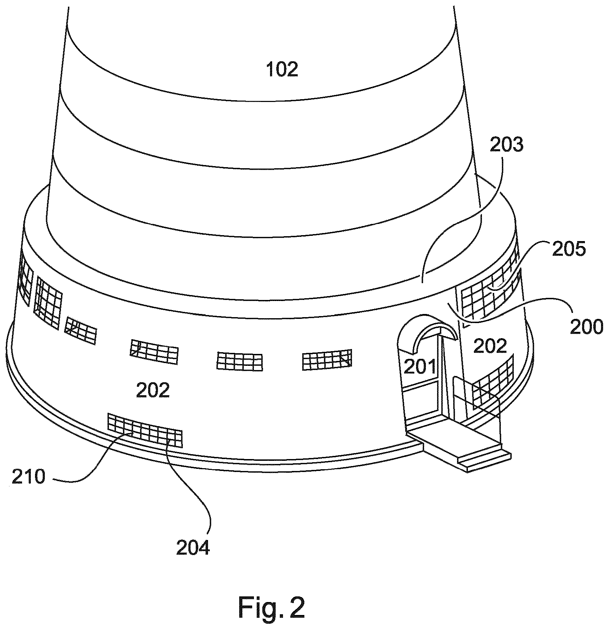

Fig. 2 zeigt eine schematische Darstellung eines unteren Bereiches eines Turms einer Windenergieanlage gemäß einem ersten Ausführungsbeispiel. Die erste Kühleinheit 200 weist eine Wandung 202 und ein Dach 203 auf und umgibt den Turm 102 vorzugsweise komplett. Alternativ dazu kann die erste Kühleinheit 200 den Turm 102 aber auch nur teilweise umgeben. Die erste Kühleinheit 200 weist eine Mehrzahl von unteren Öffnungen 204 sowie eine Mehrzahl von oberen Öffnungen 205 in der Wandung 202 auf. Die oberen Öffnungen können auch in dem Dach 203 der ersten Kühleinheit vorgesehen sein. Ferner weist die erste Kühleinheit 200 mindestens eine Tür 201 auf.

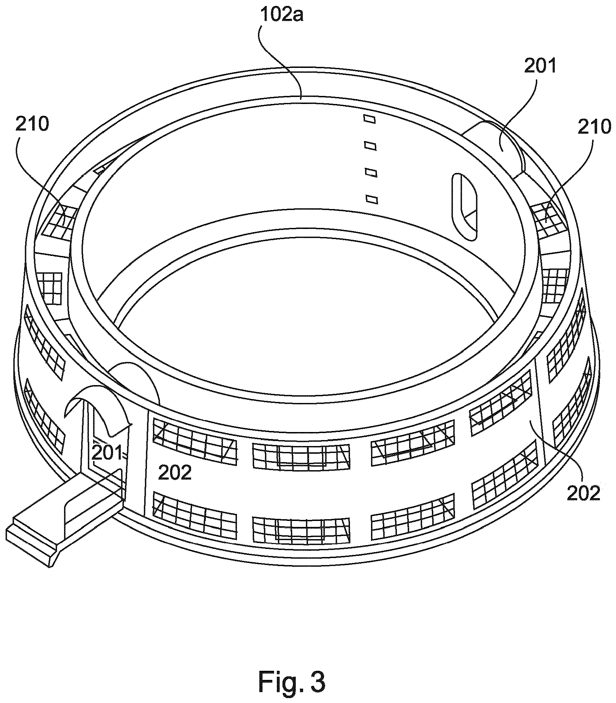

Fig. 3 zeigt eine schematische Teilschnittansicht eines Turms einer Windenergieanlage gemäß dem ersten Ausführungsbeispiel. Die erste Kühleinheit 200 weist eine Wandung 202 mit einer Mehrzahl von unteren Öffnungen 204 und einer Mehrzahl von oberen Öffnungen 205 auf. Die Wandung 202 weist einen Abstand zu einer Turmwandung 102a des Turms 102 auf. Zwischen der Turmwandung 102a und der Wandung 202 der ersten Kühleinheit 200 ist eine Mehrzahl von Wärmetauschern 210 vorgesehen. Die Wärmetauscher 210 können beispielsweise eine Kühlleitung oder eine Mehrzahl von Kühlleitungen aufweisen. Optional können die Wärmetauscher 210 senkrecht zu der Längsrichtung 102b des Turms 102 angeordnet sein.

Gemäß der Erfindung kann kühle Luft, durch die unteren Öffnungen 204 angesaugt, an den Wärmetauschern 210 vorbeigeleitet werden und die erwärmte Luft kann dann über die oberen Öffnungen 205 nach außen abgegeben werden.

Gemäß der Erfindung kann in den Wärmetauschern 210 ein Kühlmittel vorhanden sein, welches durch die Turmwandung 102a durchgeführt wird, um die Komponenten der Windenergieanlage zu kühlen.

Insbesondere können die Wärmetauscher 210 eine Wärmetauscherfläche 211 aufweisen, welche die aktive wärmetauschende Fläche 211 darstellt. Die wärmetauschende Fläche 211 kann z. B. eine Mehrzahl von Wandungen der Kühlleitungen aufweisen, sodass die durch die wärmetauschende Fläche 211 durchströmende kühle Luft das Kühlmittel in den Kühlleitungen kühlt.

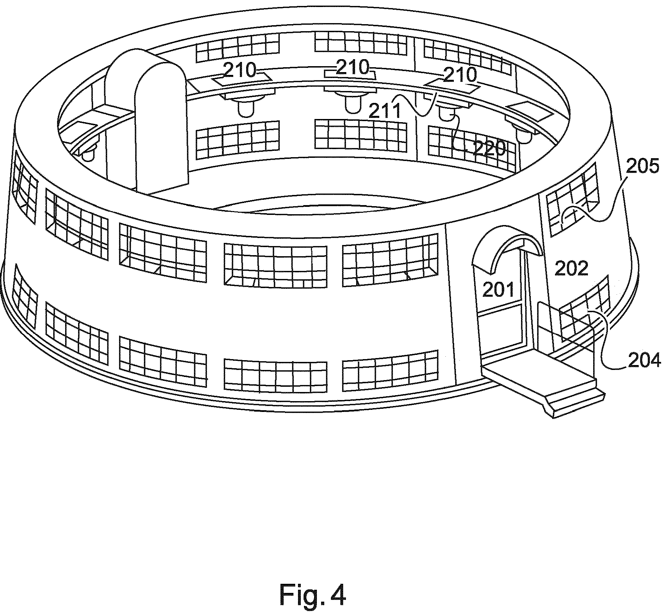

Fig. 4 zeigt eine schematische Darstellung einer ersten Kühleinheit einer Windenergieanlage gemäß einem zweiten Ausführungsbeispiel. In Fig. 4 ist insbesondere nur die erste Kühleinheit 200 gezeigt. Die erste Kühleinheit 200 weist eine Wandung 202, eine Mehrzahl von unteren Öffnungen 204, eine Mehrzahl von oberen Öffnungen 205 sowie eine Mehrzahl von Wärmetauschern 210 auf. Optional können unter den Wärmetauschern 210 jeweils Lüfter 220 angeordnet sein. Somit kann kühle Luft über die unteren Öffnungen 204 durch die Lüfter 220 angesaugt, an dem Wärmetauscher 210 vorbeigeführt (dort erwärmt) und über die oberen Öffnungen 205 abgegeben werden. Durch diesen Luftstrom kann ein Kühlmittel in den Wärmetauschern 210 gekühlt werden.

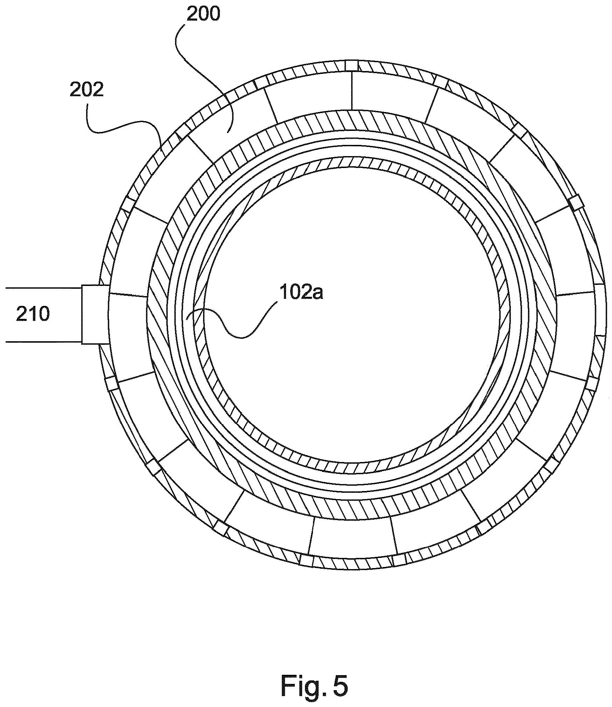

Fig. 5 zeigt einen Querschnitt eines unteren Bereichs eines Turms der Windenergieanlage. Die Wandung 202 der ersten Kühleinheit 200 befindet sich in einem Abstand zu der Wandung 102a des Turmsegmentes 102. In dem Bereich zwischen der Turmwandung 102a und der Wandung 202 der ersten Kühleinheit 200 kann eine Mehrzahl von Wärmetauschern 210 vorgesehen sein.

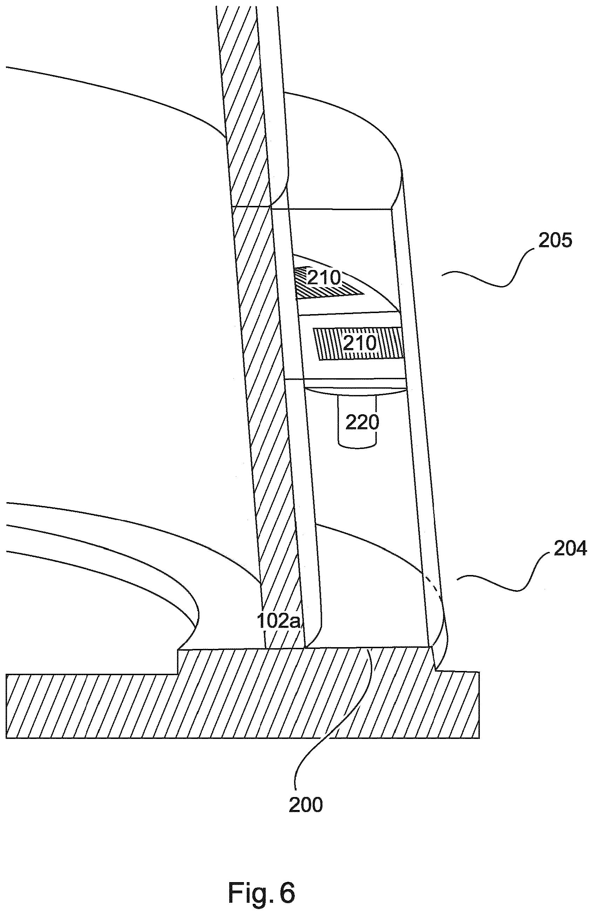

Fig. 6 zeigt eine schematische Schnittansicht eines unteren Bereichs eines Turms einer Windenergieanlage gemäß dem ersten oder zweiten Ausführungsbeispiel. Die erste Kühleinheit 200 weist eine Wandung 202 in einem Abstand zu der Turmwandung 102a, eine Mehrzahl von unteren Öffnungen 204 und eine Mehrzahl von oberen Öffnungen 205 auf. Zwischen der Turmwandung 102a und der Wandung 202 der ersten Kühleinheit 200 ist eine Mehrzahl von Wärmetauschern 210 z. B. senkrecht zur Längsachse des Turms angeordnet. Optional kann ein Lüfter 220 unter jedem Wärmetauscher 210 vorgesehen sein.

Gemäß einem alternativen Ausführungsbeispiel der Erfindung weist die erste Kühleinheit 200 keine Ventilatoren oder Lüfter 220, sondern mindestens eine Pumpe auf, um ein Kühlmittel durch die Wärmetauscher 210 zu fördern.

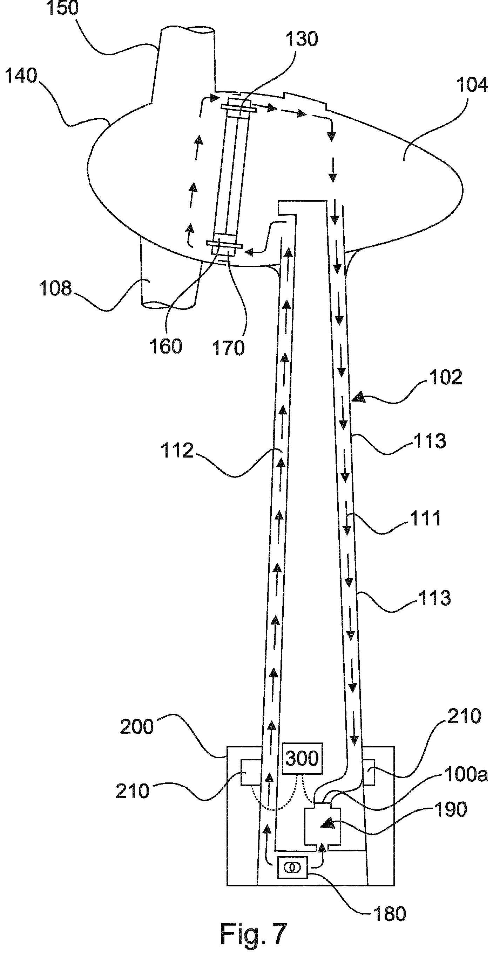

Fig. 7 zeigt eine schematische Schnittansicht einer Windenergieanlage gemäß einem dritten Ausführungsbeispiel. In Fig. 7 ist eine Windenergieanlage gezeigt, wie sie in EP 1 200 733 beschrieben ist. Zusätzlich dazu ist im unteren Bereich des Turms eine erste Kühleinheit 200 gemäß dem ersten oder zweiten Ausführungsbeispiel vorgesehen. Die Windenergieanlage gemäß dem dritten Ausführungsbeispiel verfügt somit über zwei Kühlsysteme bzw. Kühleinheiten. In Fig. 7 ist ein Querschnitt einer Windenergieanlage mit einer Gondel 104 am Kopfende eines Turms 102 gezeigt. Die Gondel 104 kann einen Hauptantriebsstrang der Windenergieanlage aufnehmen. Dieser Hauptantriebsstrang besteht im Wesentlichen aus einem aerodynamischen Rotor 106 sowie daran angebrachten Rotorblättern 108. Der aerodynamische Rotor 106 ist mit einem Generator 130 verbunden, welcher einen Generatorläufer 160 und einen Generatorstator 170 aufweist. Dreht sich der aerodynamische Rotor 106 und damit der Generatorläufer 160, wird elektrische Energie, beispielsweise als Wechselstrom oder als Gleichstrom, erzeugt. Im unteren Bereich des Turms 102 können ein Transformator 180 sowie ein Leistungsschrank 190 mit einem Wechselrichter vorgesehen sein.

Ferner weist die Windenergieanlage eine zweite Kühleinheit auf, welche beispielsweise im unteren Bereich des Turms 102 mindestens einen Ventilator 100a aufweist, welcher Luft aus dem Bereich des Transformators 180 und des Leistungsschrankes bzw. Wechselrichters 190 durch einen Kanal 112 entlang der Wandung des Turms 102 nach oben in die Gondel 104 treiben kann. Dort fließt der Luftstrom durch oder an dem Generator 130 vorbei und fließt wieder an der Wandung 102a des Turms 102 entlang nach unten. Somit wird die Luft gekühlt und es wird ein geschlossener Kühlkreislauf erhalten, was insbesondere im Offshore-Bereich sehr von Vorteil ist, weil somit keine oder nur sehr beschränkt externe Luft eindringen kann. Die Kühlkanäle 112, 111 können als Schläuche oder Kanäle ausgestaltet sein. Alternativ dazu kann die Wandung des Turms 102 doppelwandig ausgestaltet sein. Dadurch, dass die erwärmte Luft vom unteren Bereich des Turms 102 durch den Kanal 111 nach oben fließt und somit an der Wandung des Turms 102 vorbei, wirkt die Wandung des Turms 102 als ein Wärmetauscher, sodass die Luft innerhalb der Kanäle abgekühlt wird.

Optional kann der Leistungsschrank 190 und ein Transformator 180 durch den Luftstrom durch die Kühlkanäle 111, 112 der zweiten Kühleinheit gekühlt werden.

Wie bereits oben beschrieben ist im unteren Bereich des Turms 102 zusätzlich eine Kühleinheit 200 gemäß der Erfindung vorgesehen.

Somit weist die Windenergieanlage gemäß dem dritten Ausführungsbeispiel ein Kühlsystem bestehend aus zwei Kühleinheiten auf. Die zweite Kühleinheit wird durch die Kanäle 111, 112 an der Wandung des Turms 102 sowie durch den Ventilator 100a ausgebildet. Die erste Kühleinheit 200 entspricht der Kühleinheit gemäß dem ersten oder zweiten Ausführungsbeispiel.

Bei einer Kombination beider Kühleinheiten kann erfindungsgemäß dann jedes der Kühleinheiten so gesteuert werden, um somit eine optimale Kühlung der Windenergieanlage einerseits, wie auch einen optimalen Betrieb der einzelnen Kühleinheiten anderseits zu erreichen.

Die Windenergieanlage gemäß dem dritten Ausführungsbeispiel weist eine Kühlung-Steuereinheit 300 auf. Die Kühlung-Steuereinheit 300 ist sowohl mit der ersten Kühleinheit 200, 210 als auch mit der zweiten Kühleinheit (Lüfter 100a) gekoppelt. Die Steuereinheit 300 kann ferner Betriebsparameter der Windenergieanlage wie beispielsweise die Temperatur des Generators, eine Temperatur des Transformators, eine Temperatur der Leistungsschränke, eine Außentemperatur etc. empfangen und den Betrieb der ersten und zweiten Kühleinheit entsprechend steuern. In einer ersten Betriebsart der Kühlung-Steuereinheit 300 wird lediglich die zweite Kühleinheit, durch Steuern der Drehzahl des Lüfters 100a gesteuert. Die erste Kühleinheit 200 kann dabei deaktiviert sein. In einer zweiten Betriebsart ist lediglich die erste Kühleinheit 200 aktiviert, nicht jedoch die zweite Kühleinheit 100a. In einer dritten Betriebsart ist sowohl die erste als auch die zweite Kühleinheit 100a, 200 aktiviert. Die Kühlung-Steuereinheit 300 ist dazu ausgestaltet, den Betrieb der ersten und zweiten Kühleinheit 100a, 200 so zu steuern, dass eine optimale Kühlung unter Berücksichtigung der Kühleigenschaften der ersten und zweiten Kühleinheit erreicht wird.

So ist es gemäß einem Aspekt der Erfindung möglich, dass nicht beide Kühleinheiten stets und ständig zur Kühlung der gesamten Aggregate der Windenergieanlage im gleichen individuell und maximal möglichen Maße beitragen, sondern, dass dann, wenn eine erste Kühlung der Windenergieanlage benötigt wird, zunächst einmal die erfindungsgemäße erste Kühleinheit gemäß dem ersten oder zweiten Ausführungsbeispiel betrieben wird und dass mit weiter steigendem Kühlbedarf dann die zweite Kühleinheit im Inneren des Turms, also das mit dem geschlossenen Kühlkreislauf, zugeschaltet wird.

Selbstverständlich ist es auch möglich, die Zuschaltung der einzelnen Systeme genau umgekehrt vorzunehmen, also zum Beispiel im niedrigen Teillastbereich der Windenergieanlage zunächst einmal nur mit der ersten Kühleinheit von Fig. 7 zu arbeiten und erst bei einem höheren Kühlbedarf die zweite Kühleinheit hinzuzuschalten.

Mittels der Steuerungseinheit 300 kann die Zuschaltung der einzelnen Kühleinheiten zielgerichtet gesteuert und der jeweilige Anteil der Kühlung der einzelnen Kühleinheiten zielgerichtet eingestellt werden, um somit für eine optimale Kühlung der Komponenten in der Windenergieanlage einerseits zu sorgen, sowie anderseits auch mit möglichst wenig energetischem Aufwand die Gesamtkühlung der Windenergieanlage zu betreiben.

Schließlich ist es vorzugsweise auch möglich, dass der im Inneren des Turms der Windenergieanlage angeordnete geschlossene Kühlkreislauf eingebunden ist in den Kühlkreislauf, der an der Außenwand der Turmwandung, aber innerhalb der Abdeckung ausgebildet ist.

Als Kühlmedium kann ein Gas, zum Beispiel Luft, aber auch Flüssigkeit, zum Beispiel Wasser, Öl oder dergleichen, eingesetzt werden.

Bei einem Gas als Kühlmedium wird mittels einer Ventilationseinrichtung dafür Sorge getragen, dass das Kühlmedium durch die Leitungen/Rohre bewegt wird. Bei einem flüssigen Kühlmedium wird die Zwangskonvektion mittels einer Pumpe oder mehreren Pumpen bewerkstelligt.

Die Ventilatoren einerseits und/oder die Pumpen anderseits werden dabei von der Steuerungseinheit 300 gesteuert und sind mit dieser verbunden.

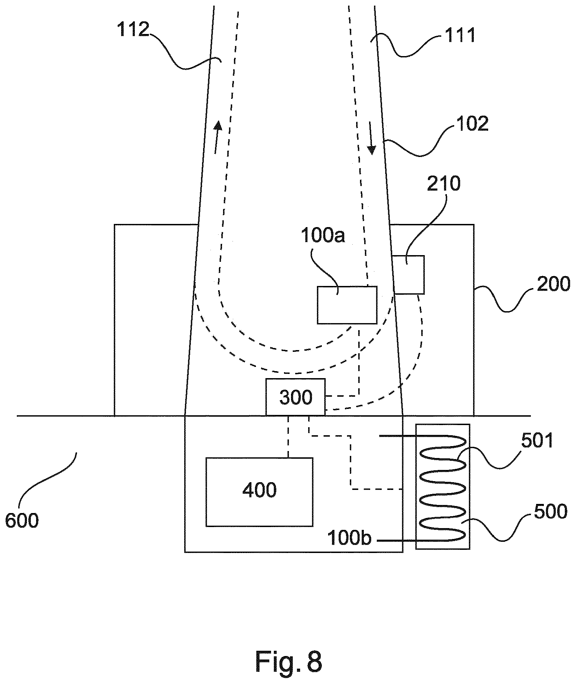

Fig. 8 zeigt eine schematische Schnittansicht einer Windenergieanlage gemäß einem vierten Ausführungsbeispiel. In Fig. 8 ist insbesondere nur ein unterer Teil einer Windenergieanlage sowie das Fundament der Windenergieanlage gezeigt. Die Windenergieanlage weist einen Turm 102 sowie ein Fundament 600 auf. Um den unteren Bereich des Turms herum ist eine erste Kühleinheit 200 gemäß dem ersten oder zweiten Ausführungsbeispiel vorgesehen. Im Inneren des Turms der Windenergieanlage ist mindestens ein Lüfter 101 sowie Kühlkanäle 111, 112 vorgesehen, welche eine zweite Kühleinheit gemäß dem dritten Ausführungsbeispiel von Fig. 7 ausbilden. Optional kann in einem Keller 100b unterhalb des Turms 102 eine dritte Kühleinheit wie z.B. ein Wärmespeicher 400 vorgesehen sein. Dieser Wärmespeicher 400 kann beispielsweise einen Wassertank von beispielsweise 20 m³ oder mehr darstellen. Der Wärmespeicher 400 stellt somit eine dritte Kühleinheit dar und kann mit der ersten und/oder zweiten Kühleinheit 200, 100a verbunden sein. Wie in dem dritten Ausführungsbeispiel ist eine Kühlung-Steuereinheit 300 vorgesehen, welche mit der ersten, zweiten und/oder dritten Kühleinheit gekoppelt sein kann und den Betrieb der jeweiligen Kühleinheiten steuern kann.

Zusätzlich dazu kann optional eine vierte Kühleinheit 500 im Fundament 600 der Windenergieanlage vorgesehen sein. Die vierte Kühleinheit 500 kann als ein Wärmetauscher mit Kühlkanälen 501 im Fundament 600 vorgesehen sein. Die vierte Kühleinheit 500 kann mit der ersten, zweiten und/oder dritten Kühleinheit gekoppelt sein.

Die erfindungsgemäße Windenergieanlage kann einen Betonturm oder einen Stahlturm oder eine Kombination davon aufweisen.

Mit dem Wärmespeicher 400 bzw. der dritten Kühleinheit 400 im Keller 100b kann eine Klimatisierung oder Klimaregulierung des Kellers 100b ermöglicht werden. Dies ist beispielswiese vorteilhaft, wenn Spannanker beispielsweise bei einem Betonturm im Keller 100b vorgesehen sind. Durch den Betrieb der dritten Kühleinheit 400 kann somit ein Rosten der Spannanker zumindest reduziert werden.

Optional können der Transformator 180 und/oder die Leistungsschränke 190 mit der Leistungselektronik gemäß Fig. 7 in dem Keller 100b vorgesehen sein. Der Betrieb der dritten Kühleinheit 400, nämlich des Wärmespeichers 400, kann durch die Steuereinheit 300 somit so gesteuert werden, dass die Leistungsschränke 190 und/oder der Transformator 180 im Keller 100b gekühlt wird bzw. der Keller 100b kann durch Betrieb der dritten Kühleinheit 400 klimatisiert bzw. klimareguliert werden.

Bei der Steuerung der ersten, zweiten, dritten oder vierten Kühleinheit kann die Steuereinheit 300 optional die Temperatur im Keller 100b, im Fundament 600 und außerhalb des Turms 102 erfassen und bei der Steuerung berücksichtigen.

## Patentansprüche

1. Windenergieanlage, mit
einem Turm (102) mit einer Turmwandung (102a) und einer Längsachse (102b), und
einer ersten Kühleinheit (200) im unteren Bereich des Turms (102) mit einer Mehrzahl von Wärmetauschern (210), und
einer äußeren Wandung (202) in einem Abstand zu der Turmwandung (102a),
wobei die Mehrzahl der Wärmetauscher (210) zwischen der Turmwandung (102a) und der äußeren Wandung (202) der ersten Kühleinheit (200) angeordnet sind,
wobei die erste Kühleinheit (200) eine Mehrzahl von unteren Öffnungen (204) unterhalb der Mehrzahl von Wärmetauschern (210) und eine Mehrzahl von oberen Öffnungen (205) oberhalb der Mehrzahl von Wärmetauschern (210) aufweist, und
wobei die erste Kühleinheit (200) ein Dach (203) aufweist, welches sich zwischen der Turmwandung (102a) und der äußeren Wandung (202) der Kühleinheit (200) erstreckt und einen Zwischenraum dazwischen abdeckt,
wobei die erste Kühleinheit (200) mindestens einen Lüfter (220) aufweist, welcher Luft durch die unteren Öffnungen (204) ansaugt und durch die Wärmetauscher (210) leitet, so dass die Luft durch die oberen Öffnungen (205) austreten kann,
**dadurch gekennzeichnet, dass** die erste Kühleinheit (200) mindestens eine Kühlleitung aufweist, welche sich durch die Turmwandung (102a) und/oder ein Fundament (600) erstreckt und welches durch ein Kühlmedium durchflossen wird.

2. Windenergieanlage nach Anspruch 1, wobei
die Mehrzahl der Wärmetauscher (210) und insbesondere eine Wärmetauscherfläche im Wesentlichen senkrecht oder waagerecht zu der Längsachse (102b) des Turms (102) der Windenergieanlage angeordnet sind.

3. Windenergieanlage nach einem der Ansprüche 1 bis 2, wobei
im Inneren des Turms (102) eine zweite Kühleinheit mit mindestens einem Lüfter (100a) und mindestens einem Kühlkanal (111, 112) an der Turmwandung (102a) und/oder dem Fundament (600) vorgesehen ist,
wobei der Lüfter (100a) dazu ausgestaltet ist, Luft entlang des mindestens einen Kühlkanals (111, 112) an der Turmwandung (102a) und/oder dem Fundament zu Kühlzwecken entlang strömen zu lassen.

4. Windenergieanlage nach einem der Ansprüche 1 bis 3, ferner mit
einem Fundament (600),
wobei der Turm (102) auf dem Fundament (600) vorgesehen ist, und
einem Keller (100b) in oder auf dem Fundament (600),
wobei in dem Keller (100b) eine dritte Kühleinheit (400), insbesondere in Form eines Wärmespeichers, vorgesehen ist, und
einer Kühlung-Steuereinheit (300), welche dazu ausgestaltet ist, die erste, zweite und/oder dritte Kühleinheit (200, 100a, 400) zu steuern.

5. Windenergieanlage nach Anspruch 3, ferner mit
einer vierten Kühleinheit (500) in dem Fundament (600) der Windenergieanlage,
wobei die vierte Kühleinheit (500) mindestens einen Kühlkanal (501) in dem Fundament (600) aufweist,
wobei die Steuereinheit (300) dazu ausgestaltet ist, den Betrieb der ersten, zweiten, dritten und/oder vierten Kühleinheit zu steuern.

6. Verfahren zum Steuern einer Kühlung einer Windenergieanlage, welche einen Turm (102) mit einer Turmwandung (102a) und einer Längsachse (102b) aufweist, wobei die Windenergieanlage eine erste Kühleinheit (200) im unteren Bereich des Turms (102) und außen am Turm sowie mit einer Mehrzahl von Wärmetauschern (210), eine zweite <ühleinheit (100a, 111, 112) im Inneren des Turms der Windenergieanlage, eine dritte <ühleinheit (400) in einem Keller der Windenergieanlage und eine vierte <ühleinheit (500) in einem Fundament einer Windenergieanlage aufweist, mit den Schritten:
Steuern des Betriebs der ersten, zweiten, dritten und/oder vierten Kühleinheit (200, 100a, 400, 500) mittels einer Kühlung-Steuereinheit (300),
wobei in einer ersten Betriebsart eine der vier Kühleinheiten aktiviert wird, während die anderen deaktiviert sind,
wobei in einer zweiten Betriebsart zwei der vier Kühleinheiten aktiviert werden, während die anderen beiden deaktiviert sind,
wobei in einer dritten Betriebsart drei der vier Kühleinheiten aktiviert sind, und
wobei in einer vierten Betriebsart alle vier Kühleinheiten aktiviert sind.

## Claims

1. A wind power installation comprising
a tower (102) having a tower wall (102a) and a longitudinal axis (102b), and
a first cooling unit (200) in the lower region of the tower (102) having a plurality of heat exchangers (210), and
an outer wall (202) at a spacing relative to the tower wall (102a),
wherein the plurality of heat exchangers (210) are arranged between the tower wall (102a) and the outer wall (202) of the first cooling unit (200),
wherein the first cooling unit (200) has a plurality of lower openings (204) beneath the plurality of heat exchangers (210) and a plurality of upper openings (205) above the plurality of heat exchangers (210), and
wherein the first cooling unit (200) has a roof (203) which extends between the tower wall (102a) and the outer wall (202) of the cooling unit (200) and covers over an intermediate space therebetween,
wherein the first cooling unit (200) has at least one fan (220) which draws in air through the lower openings (204) and passes it through the heat exchangers (210) so that the air can issue through the upper openings (205),
**characterized in that** the first cooling unit (200) has at least one cooling conduit which extends through the tower wall (102a) and/or a foundation (600) and through which a cooling medium flows.

2. A wind power installation according to claim 1 wherein
the plurality of heat exchangers (210) and in particular a heat exchanger surface are arranged substantially perpendicularly or horizontally relative to the longitudinal axis (102b) of the tower (102) of the wind power installation.

3. A wind power installation according to one of claims 1 to 2 wherein
provided in the interior of the tower (102) is a second control unit having at least one fan (100a) and at least one cooling passage (111, 112) at the tower wall (102a) and/or the foundation (600),
wherein the fan (100a) is adapted to cause air to flow along the at least one cooling passage (111, 112) along the tower wall (102a) and/or the foundation for cooling purposes.

4. A wind power installation according to one of claims 1 to 3 and further comprising a foundation (600),
wherein the tower (102) is provided on the foundation (600), and
a cellar (100b) in or on the foundation (600),
gwherein a third cooling unit (400), in particular in the form of a heat storage means, is provided in the cellar (100b), and
a cooling control unit (300) adapted to control the first, second and/or third cooling unit (200, 100a, 400).

5. A wind power installation according to claim 3 and further comprising a fourth cooling unit (500) in the foundation (600) of the wind power installation, wherein the fourth cooling unit (500) has at least one cooling passage (501) in the foundation (600),
wherein the control unit (300) is adapted to control operation of the first, second, third and/or fourth control unit.

6. A method of controlling cooling of a wind power installation which has a tower (102) having a tower wall (102a) and a longitudinal axis (102b), wherein the wind power installation has a first cooling unit (200) in the lower region of the tower (102) and externally on the tower and with a plurality of heat exchangers (210), a second cooling unit (100a, 111, 112) in the interior of the tower of the wind power installation, a third cooling unit (400) in a cellar of the wind power installation, and a fourth cooling unit (500) in a foundation of a wind power installation, comprising the steps:
controlling operation of the first, second, third and/or fourth cooling unit (200, 100a, 400, 500) by means of a cooling control unit (300),
wherein in a first mode of operation one of the four cooling units is activated while the others are deactivated,
wherein in a second mode of operation two of the four cooling units are activated while the other two are deactivated,
wherein in a third mode of operation three of the four cooling units are activated, and
wherein in a fourth mode of operation all four cooling units are activated.

## Revendications

1. Éolienne avec
une tour (102) avec une paroi de tour (102a) et un axe longitudinal (102b), et
une première unité de refroidissement (200) dans la zone inférieure de la tour (102) avec une pluralité d'échangeurs de chaleur (210), et
une paroi extérieure (202) à une distance par rapport à la paroi de tour (102a),
dans laquelle la pluralité d'échangeurs de chaleur (210) sont disposés entre la paroi de tour (102a) et la paroi extérieure (202) de la première unité de refroidissement (200),
dans laquelle la première unité de refroidissement (200) présente une multitude d'ouvertures inférieures (204) sous la multitude d'échangeurs de chaleur (210) et une multitude d'ouvertures supérieures (205) au-dessus de la multitude d'échangeurs de chaleur (210), et
dans laquelle la première unité de refroidissement (200) présente un toit (203), lequel s'étend entre la paroi de tour (102a) et la paroi extérieure (202) de l'unité de refroidissement (200) et recouvre un espace intermédiaire intercalé,
dans laquelle la première unité de refroidissement (200) présente au moins un ventilateur (220), lequel aspire de l'air à travers les ouvertures inférieures (204) et le guide à travers les échangeurs de chaleur (210) de sorte que l'air peut sortir par les ouvertures supérieures (205),
**caractérisée en ce que**
la première unité de refroidissement (200) présente au moins une conduite de refroidissement, laquelle s'étend à travers la paroi de tour (102a) et/ou une fondation (600) et laquelle est traversée par un milieu de refroidissement.

2. Éolienne selon la revendication 1, dans laquelle
la multitude des échangeurs de chaleurs (210) et en particulier une surface d'échangeurs de chaleur sont disposés de manière sensiblement verticale ou horizontale par rapport à l'axe longitudinal (102b) de la tour (102) de l'éolienne.

3. Éolienne selon l'une quelconque des revendications 1 à 2, dans laquelle
une deuxième unité de refroidissement avec au moins un ventilateur (100a) et au moins un canal de refroidissement (111, 112) est prévue au niveau de la paroi de tour (102a) et/ou de la fondation (600) dans l'intérieur de la tour (102),
dans laquelle le ventilateur (100a) est configuré pour faire s'écouler de l'air le long de l'au moins un canal de refroidissement (111, 112) au niveau de la paroi de tour (102a) et/ou de la fondation à des fins de refroidissement.

4. Éolienne selon l'une quelconque des revendications 1 à 3, avec en outre
une fondation (600),
dans laquelle la tour (102) est prévue au niveau de la fondation (600), et
une cave (100b) dans ou sur la fondation (600),
dans laquelle une troisième unité de refroidissement (400), en particulier sous la forme d'un accumulateur de chaleur, est prévue dans la cave (100b), et
une unité de commande de refroidissement (300), laquelle est configurée pour commander la première, la deuxième et/ou la troisième unité de refroidissement (200, 100a, 400).

5. Éolienne selon la revendication 3, avec en outre
une quatrième unité de refroidissement (500) dans la fondation (600) de l'éolienne,
dans laquelle la quatrième unité de refroidissement (500) présente au moins un canal de refroidissement (501) dans la fondation (600),
dans laquelle l'unité de commande (300) est configurée pour commander le fonctionnement de la première, deuxième, troisième et/ou quatrième unité de refroidissement.

6. Procédé pour commander un refroidissement d'une éolienne, laquelle présente une tour (102) avec une paroi de tour (102a) et un axe longitudinal (102b), dans lequel l'éolienne présente une première unité de refroidissement (200) dans la zone inférieure de la tour (102) et, à l'extérieur au niveau de la tour, avec également une multitude d'échangeurs de chaleur (210), une deuxième unité de refroidissement (100a, 111, 112) dans l'intérieur de la tour de l'éolienne, une troisième unité de refroidissement (400) dans une cave de l'éolienne et une quatrième unité de refroidissement (500) dans une fondation de l'éolienne, avec les étapes :
de commande du fonctionnement de la première, deuxième, troisième et/ou quatrième unité de refroidissement (200, 100a, 400, 500) au moyen d'une unité de commande de refroidissement (300),
dans laquelle une des quatre unités de refroidissement est activée dans un premier mode de fonctionnement, tandis que les autres sont désactivées,
dans laquelle deux des quatre unités de refroidissement sont activées dans un deuxième mode de fonctionnement, tandis que les deux autres sont désactivées,
dans laquelle trois des quatre unités de refroidissement sont activées dans un troisième mode de fonctionnement, et
dans laquelle toutes les quatre unités de refroidissement sont activées dans un quatrième mode de fonctionnement.
